## Europäisches Patentamt
## European Patent Office
## Office européen des brevets

(11) Numéro de publication: **0 064 919**
**B1**

(12) **FASCICULE DE BREVET EUROPEEN**

(45) Date de publication du fascicule du brevet:
**11.09.85**

(51) Int. Cl.⁴: **G 02 B 6/26**

(21) Numéro de dépôt: **82400789.2**

(22) Date de dépôt: **30.04.82**

(54) **Dispositif extracteur et/ou réinjecteur de signal optique.**

(30) Priorité: **30.04.81 FR 8108636**

(43) Date de publication de la demande:
**17.11.82 Bulletin 82/46**

(45) Mention de la délivrance du brevet:
**11.09.85 Bulletin 85/37**

(84) Etats contractants désignés:
**AT BE CH DE FR GB IT LI LU NL SE**

(56) Documents cités:
**GB - A - 2 020 447**
**US - A - 3 937 560**
**US - A - 4 173 390**
**US - A - 4 176 908**

**IBM TDB, vol. 21, No. 4, Septembre 1978, page 1685**

(73) Titulaire: **INSTRUMENTS S.A., 25, avenue de l'Opéra,
F-75001 Paris (FR)**

(72) Inventeur: **Laude, Jean-Pierre, 3 rue des Graveriots St
Cyr La Rivière, F-91690 Saclas (FR)**

(74) Mandataire: **Le Brusque, Maurice et al, Cabinet Harlé et
Phélip 21, rue de la Rochefoucauld, F-75009 Paris (FR)**

## Description

La présente invention concerne un dispositif extracteur et/ou réinjecteur d'un signal transmis par fibres optiques. Il est plus particulièrement destiné à être intercalé sur une fibre optique de transmission de façon à permettre, tout en maintenant la continuité de transmission du signal initial à travers le dispositif de l'amont vers l'aval, d'extraire une partie du signal vers un détecteur, et en même temps de réintroduire un nouveau signal vers l'aval; ce nouveau signal pourra d'ailleurs aussi bien être le même signal extrait après régénération, ou un autre signal porteur de nouvelles informations à superposer aux informations initiales.

Les dispositifs connus utilisés actuellement dans ce but, comme par exemple celui décrit par le brevet US-A-3 937 560, comportent généralement, entre la fibre de transmission amont et la fibre de transmission aval, un système optique destiné à rendre parallèles les rayons lumineux issus de la fibre amont, et un système optique focalisant à nouveau le faisceau parallèle sur l'entrée de la fibre aval. Dans la partie où les rayons sont parallèles, le dispositif comporte un petit système réfléchissant qui dérive une petite fraction de la lumière vers un détecteur ou tout autre système récepteur. Le même peut servir par son autre face pour introduire un nouveau signal vers la fibre aval. Mais dans un tel dispositif une partie de la nouvelle lumière introduite peut déborder le miroir et passer directement vers le détecteur, faussant ainsi l'information qui y est recueillie.

On connaît aussi, par exemple par la demande de brevet français publiée sous le numéro 2 441 860, un moyen d'assurer la continuité de transmission d'un signal entre une fibre amont et une fibre aval disposées symétriquement par rapport au centre d'un miroir sphérique concave; la totalité de la lumière issue de l'extrémité de la fibre amont est alors renvoyée par réflexion sur l'entrée de la fibre aval où elle continue à se propager. Mais un tel dispositif ne permet pas d'extraire une partie du signal, ni d'y superposer un nouveau signal.

Un dispositif du même genre, mais utilisant un miroir elliptique a aussi été décrit par le document IBM TBD volume 21, numéro 4 de Septembre 1978 à la page 1685.

La présente invention s'applique donc à un dispositif extraceur et/ou réinjecteur de signal optique entre une fibre optique de transmission amont d'amenée et une fibre optique de transmission aval de renvoi, destiné à assurer à la fois, la continuité de la transmission d'un signal optique entre les fibres amont et aval, l'extraction d'une partie du signal optique provenant de la fibre amont pour la diriger vers au moins un détecteur, et éventuellement la réinjection dans la fibre aval d'un nouveau signal optique en provenance d'au moins un émetteur, dispositif du type comportant un système réfléchissant disposé sur le trajet optique entre la fibre amont et la fibre aval, adapté de façon à ne diriger vers le détecteur qu'une partie de la lumière provenant de la fibre amont, le même système refléchissant étant également éventuellement utilisable pour réinjecter dans la fibre aval de la lumière en provenance de l'émetteur.

Selon l'invention ledit système refléchissant comporte un miroir sphérique concave de sommet $S$ et de centre $C_1$, et l'extrémité de la fibre de transmission amont est disposée, dans le plan perpendiculaire en $C_1$ à l'axe $SC_1$, en position légèrement décalée par rapport à $C_1$ de telle sorte que son image par le miroir se forme symétriquement par rapport à $C_1$ sur l'extrémité d'une fibre réceptrice, la partie centrale de ce premier miroir étant remplacée par une deuxième surface sphérique réfléchissante de même sommet et de même rayon mais disposée de façon à ce que les extrémités des fibres amont et réceptrice ne soient plus conjuguées objet-image par rapport à cette deuxième surface réfléchissante; l'extrémité d'une fibre de liaison au détecteur et éventuellement celle d'une fibre de liaison à l'émetteur sont disposées de façon à être conjuguées objet-image, respectivement, des extrémités des fibres amont et aval par rapport à cette deuxième surface réfléchissante.

Selon une forme préférentielle de réalisation de l'invention la deuxième surface sphérique réfléchissante est un miroir dont le centre $C_2$ est décalé par rapport à $C_1$, et l'extrémité de la fibre de liaison au détecteur, et éventuellement celle de la fibre de liaison à l'émetteur sont disposées dans le plan perpendiculaire en $C_1$ à l'axe $SC_1$, respectivement, symétriquement à l'extrémité des fibres amont et aval par rapport à $C_2$.

Selon une autre forme de réalisation de l'invention la deuxième surface réfléchissante est un réseau de diffraction concave tracé sur le même support sphérique que le miroir, et les extrémités d'au moins une fibre de liaison avec au moins un détecteur d'une longueur d'onde particulière et d'au moins une fibre de liaison à au moins un émetteur d'une longueur d'onde particulière, sont disposées respectivement dans les directions de diffraction correspondant aux longueurs d'onde concernées.

L'invention sera mieux comprise en se référant à des modes de réalisation particuliers donnés à titre d'exemples et représentés par les dessins annexés.

La figure 1 est un schéma optique simplifié rappelant l'état antérieur de la technique.

La figure 2 est un schéma optique d'une forme de réalisation de l'invention, du type utilisant un miroir sphérique concave pour la transmission de la fibre amont vers la fibre aval.

La figure 3 est une variante de réalisation du dispositif selon la figure 2, permettant d'introduire un retard sur la lumière transmise directement de la fibre amont à la fibre aval.

La figure 4 est une autre variante de réalisation dans laquelle on utilise un réseau de diffraction.

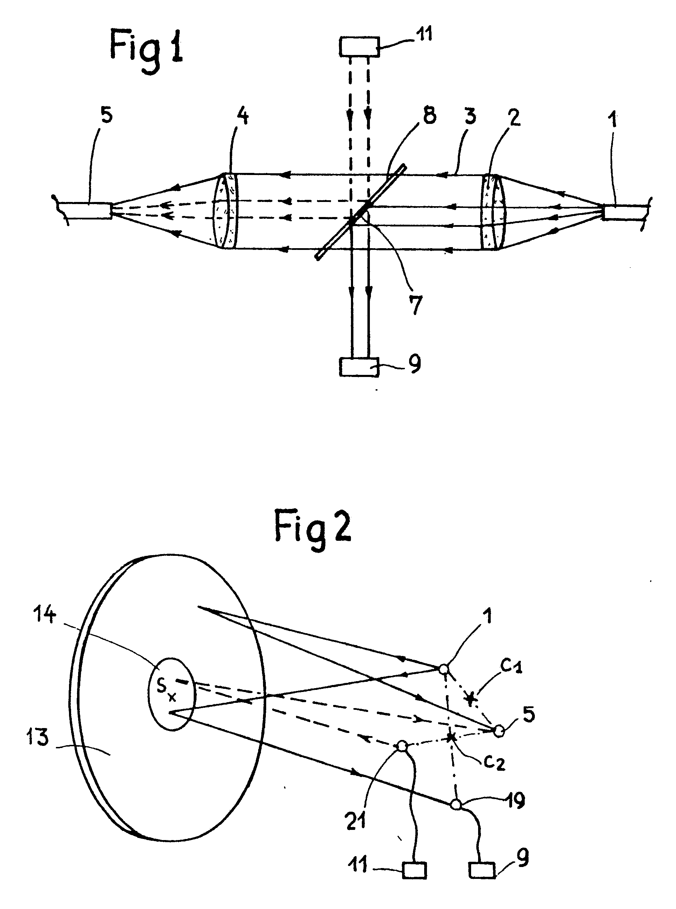

En se référant tout d'abord à la figure 1 on retrouvera une disposition générale connue pour un dispositif coupleur extracteur. La lumière transportée par la fibre de transmission amont 1 est émise à l'extrémité de cette fibre et captée par un système optique 2 qui rend le faisceau 3 parallèle. Le faisceau 3 est ensuite à nouveau focalisé par le système optique 4 pour être concentré sur l'extrémité de la fibre de transmission aval 5. Le prélèvement est fait dans la partie centrale du faisceau parallèle 3, au moyen d'un petit miroir totalement réfléchissant 7 constitué par une couche réfléchissante formée au centre d'une lame totalement transparente 8. La faisceau prélevé par le miroir 7 est renvoyé vers un détecteur 9. La lame 7 étant traitée sur ses deux faces on pourra aussi réinjecter de la lumière, à partir d'une source 11, en envoyant son faisceau sur le miroir 7 qui le renverra vers le système 4 et la fibre 5.

On se référera maintenant à la figure 2, qui schématise un mode de réalisation selon l'invention dans lequel, la transmission directe d'une fibre amont à une fibre aval est réalisée au moyen d'un miroir sphérique concave 13 de sommet S et de centre $C_1$. Les extrémités 1 et 5 des fibres de transmission respectivement amont et aval sont ici disposées symétriquement au voisinage et de part et d'autre du centre $C_1$, et dans le plan perpendiculaire à l'axe $SC_1$. Ainsi toute la lumière émise à l'extrémité 1 de la fibre amont est réfléchie vers l'extrémité 5 de la fibre aval. Mais la partie centrale du miroir 13 est remplacée par un autre miroir sphérique concave 14 de même sommet S et de même rayon que le miroir 13, mais dont le centre $C_2$ est décalé par rapport au centre $C_1$ du miroir 13. On voit que dans ces conditions les rayons issus de la fibre amont qui tombent sur le miroir 14 vont être réfléchis et focalisés en un point symétrique de l'extrémité 1 de la fibre amont par rapport à $C_2$. Si l'on dispose alors en ce point 19 l'extrémité d'une fibre reliée au détecteur 9, on obtiendra le prélèvement recherché des rayons centraux du faisceau émis par la fibre amont 1, et qui correspondent aux rayons de plus faible mode de transmission. De même si l'on dispose l'extrémité 21 d'une fibre optique reliée à la source 11 d'un nouveau signal, symétriquement par rapport au centre $C_2$ de l'extrémité 5 de la fibre aval, on voit que la lumière émise en 21 sera réfléchie par le miroir 14 sur la fibre aval 5 pour être transmise en même temps que la lumière en provenance de la fibre amont 1 et réfléchie par le miroir 13.

Si le cône de lumière émis par la fibre 21 est tel qu'une partie de cette lumière tombe sur le miroir 13, cette lumière sera perdue mais ne risquera pas de venir perturber la lumière recueillie par la fibre 19.

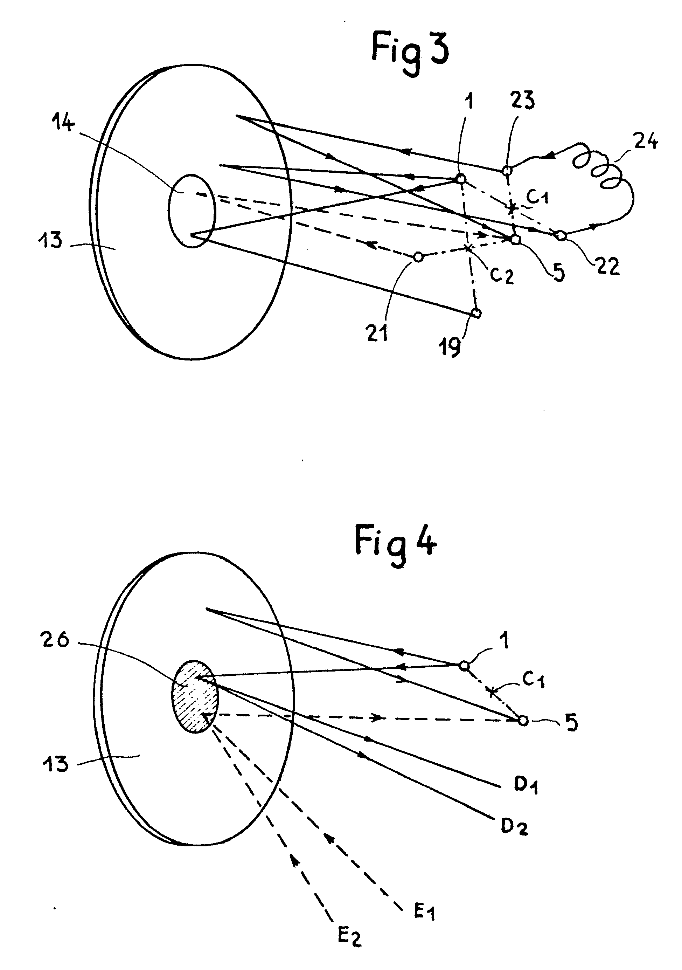

On a vu que l'on pouvait être amené à réinjecter vers l'aval, après régénération, le signal prélevé dans le dispositif, et que les circuits de régénération pouvaient entrainer un retard du signal réinjecté par rapport au signal initial. On peut obtenir une remise en phase des deux signaux en retardant légèrement la lumière transmise de la fibre amont à la fibre aval en l'obligeant à parcourir un trajet supplémentaire dans une fibre intermédiaire. Ceci peut être réalisé, comme on le voit sur la figure 3, en disposant les extrémités 22 et 23 de la fibre intermédiaire 24 en positions respectivement symétriques, par rapport à $C_1$, de l'extrémité 1 de la fibre amont et de l'extrémité 5 de la fibre aval. Ainsi la lumière issue de 1 est focalisée par le miroir 13 sur l'extrémité 22 de la fibre intermédiaire 24, d'où elle ressort en 23 pour être à nouveau réfléchie par le miroir 13 et focalisée sur l'entrée 5 de la fibre aval. Pendant ce temps la portion de lumière émise par la fibre amont 1 et réfléchie par le miroir central 14 vers le détecteur 19, puis réémise après régénération par l'extrémité de la fibre 21, est à nouveau réfléchie par le miroir 14 et focalisée sur l'entrée 5 de la fibre aval où elle se recombine avec la lumière en provenance de la fibre intermédiaire 24.

Selon un autre mode de réalisation schématisé à la figure 4, la partie centrale du miroir 13 peut aussi être constituée par un réseau de diffraction concave 26 tracé sur le même support que la surface du miroir. Les fibres amont et aval 1 et 5 sont toujours disposées symétriquement par rapport au centre $C_1$ du miroir 13, de telle sorte que toute la lumière émise en 1 et réfléchie par le miroir 13 soit focalisée en 5. Par contre la partie de lumière émise en 1 mais que tombe sur le réseau 26 est diffractée en autant de directions que de longueurs d'ondes, et on pourra ainsi détecter plusieurs signaux séparés au moyen de détecteurs tels que D1, D2. De même en disposant des émetteurs tels que E1, E2 en position convenable en fonction de la longueur d'onde de leur lumière, on pourra multiplexer sur la fibre aval 5 différentes longueurs d'ondes issues de sources séparées angulairement.

Bien entendu l'invention n'est pas strictement limitée aux modes de réalisation qui ont été décrits à titre d'exemples, mais elle couvre également des réalisations qui n'en différeraient que par des détails, par des variantes d'exécution, ou par l'utilisation de moyens équivalents. Ainsi dans les figures 2 et 3 on a représenté des extrémités de fibres optiques pour recueillir les signaux extraits ou pour introduire les nouveaux signaux à réinjecter, mais on pourrait aussi utiliser directement les détecteurs ou les émetteurs sans passer par une fibre optique; il suffirait alors de placer ces détecteurs ou émetteurs dans des directions définies par les directions symétriques par rapport à l'axe $SC_2$, des directions reliant S au centre de l'extrémité des fibres de transmission amont ou aval.

On pourrait également rendre le dispositif monobloc en remplissant l'espace compris entre les fibres et les miroirs par une substance optiquement transparente telle que par exemple du plastique ou du verre.

On pourra aussi utiliser des fibres optiques de caractéristiques différentes selon leur rôle dans le dispositif. Ainsi en particulier si l'on utilise une fibre pour la réinjection de lumière à partir de l'émetteur, on utilisera de préférence une fibre à ouverture de sortie faible, comme par exemple une fibre monomode. Ainsi toute la lumière réémise à la sortie de la fibre sera intégralement captée par le système réfléchissant (miroir plan ou concave, ou réseau) et sera conduite vers la fibre aval avec un rendement maximum pour le dispositif.

**Revendications**

1. Dispositif extracteur et/ou réinjecteur de signal optique entre une fibre optique de transmission amont d'amenée (1) et une fibre optique de transmission aval de renvoi (5), destiné à assurer à la fois, la continuité de la transmission d'un signal optique entre les fibres amont (1) et aval (5), l'extraction d'une partie du signal optique provenant de la fibre amont pour la diriger vers au moins un détecteur (9), et éventuellement la réinjection dans la fibre aval (5) d'un nouveau signal optique en provenance d'au moins un émetteur (11), dispositif du type comportant un système réfléchissant (13, 14/26) disposé sur le trajet optique entre la fibre amont (1) et la fibre aval (5), adapté de façon à ne diriger vers le détecteur (9) qu'une partie de la lumière provenant de la fibre amont (1), le même système réfléchissant étant également éventuellement utilisable pour réinjecter dans la fibre aval de la lumière en provenance de l'émetteur (11), caractérisé par le fait que ledit système réfléchissant (13, 14/26) comporte un miroir sphérique concave (13) de sommet S et de centre $C_1$, et dans lequel l'extrémité de la fibre de transmission amont (1) est disposée, dans le plan perpendiculaire en $C_1$ à l'axe $SC_1$, en position légèrement décalée par rapport à $C_1$ de telle sorte que son image par le miroir (13) se forme symétriquement par rapport à $C_1$ sur l'extrémité (5, 22) d'une fibre réceptrice (5, 24) la partie centrale de ce premier miroir (13) étant remplacée par une deuxième surface sphérique refléchissante (14, 26) de même sommet et de même rayon mais disposée de façon à ce que les extrémités des fibres amont (1) et réceptrice (5, 24) ne soient plus conjuguées objet-image par rapport à cette deuxième surface refléchissante, et par le fait que l'extrémité d'une fibre (19) de liaison au détecteur et éventuellement celle d'une fibre (21) de liaison à l'émetteur sont disposées de façon à être conjuguées objet-image, respectivement, des extrémités des fibres amont (1) et aval (5) par rapport à cette deuxième surface refléchissante (14, 26).

2. Dispositif extracteur et/ou réinjecteur selon la revendication 1, caractérisé par le fait que la deuxième surface sphérique réfléchissante est un miroir (14) dont le centre $C_2$ est décalé par rapport à $C_1$, et par le fait que l'extrémité de la fibre (19) de liaison au détecteur, et éventuellement celle de la fibre (21) de liaison à l'émetteur sont disposées dans le plan perpendiculaire en $C_1$ à l'axe $SC_1$, respectivement, symétriquement à l'extrémité des fibres amont (1) et aval (5) par rapport à $C_2$.

3. Dispositif extracteur et/ou réinjecteur selon la revendication 1, caractérisé par le fait que la deuxième surface réfléchissante est un réseau de diffraction convace tracé sur le même support sphérique que le miroir (13), et par le fait que les extrémités d'au moins une fibre de liaison avec au moins un détecteur d'une longueur d'onde particulière et d'au moins une fibre de liaison à au moins un émetteur d'une longueur d'onde particulière, sont disposées respectivement dans les directions de diffraction $(D_1, D_2)$ et $(E_1, E_2)$ correspondant aux longueurs d'onde concernées.

4. Dispositif extracteur et/ou réinjecteur selon l'une des revendications 1 à 3, caractérisé par le fait que ladite fibre réceptrice (5, 24) dont l'extrémité réceptrice (5, 22) est disposé symétriquement, par rapport à $C_1$, à l'extrémité de la fibre de transmission amont (1) est constituée par ladite fibre de transmission aval (5).

5. Dispositif extracteur et/ou réinjecteur selon l'une des revendications 1 à 3, caractérisé par le fait que ladite fibre réceptrice (5, 24) dont l'extrémité réceptrice (5, 22) est disposée symétriquement, par rapport à $C_1$, à l'extrémité de la fibre de transmission amont (1) est constituée par une fibre intermédiaire de retard optique (24), dont les extrémités réceptrice (22) et émettrice (23) sont disposées, respectivement, symétriquement à l'extrémité des fibres amont (1) et aval (5) par rapport à $C_1$.

6. Dispositif extracteur et/ou réinjecteur selon l'une quelconque des revendications précédentes, caractérisé par le fait que la fibre de liaison avec l'émetteur (11) est à faible ouverture.

**Patentansprüche**

1. Extraktions- und/oder Wiedereinbringungsvorrichtung für ein optisches Signal zwischen einer bahnaufwärts gelegenen Zufuhrübertragungsfaseroptik (1) und einer bahnabwärts gelegenen Weiterleitungs- bzw. Rückführungsübertragungsfaseroptik (5), welche Vorrichtung dazu bestimmt ist, gleichzeitig die Kontinuität der Übertragung eines optischen Signals zwischen den bahnaufwärts gelegenen Fasern (1) und den bahnabwärts gelegenen Fasern (5), die Extraktion eines Teiles des von der bahnaufwärts gelegenen Faser stammenden optischen Signals, um diesen wenigstens einem Detektor (9) zuzuführen und gegebenenfalls die Wiedereinbringung eines neuen optischen Signals, das von wenigstens einem Emitter bzw. Sender (11) abgegeben wird, in die bahnabwärts gelegene Faseroptik zu gewährleisten, wobei die Vorrichtung ein reflektierendes System (13, 14/26) aufweist, das auf der optischen Bahn zwischen der bahnaufwärts gelegenen Faser (1) und der bahnabwärts gelegenen Faser (5) angeordnet und dazu ausgebildet ist, dem Detektor (9) nur einen Teil des Lichtes zuzuleiten, das von der bahnaufwärts gelegenen Faser (1) stammt, wobei das gleiche reflektierende System gegebenenfalls ebenfalls für die Wiedereinbringung des vom Emitter bzw. Sender (11) abgegebenen Lichtes in die bahnabwärts gelegene Faser verwendet werden kann, dadurch gekennzeichnet, daß das reflektierende System (13, 14/26) einen konkaven sphärischen bzw. kugeligen Spiegel (13) mit einem Scheitelpunkt S und einem Mittelpunkt $C_1$ aufweist, in welchem Spiegel das Ende der bahnaufwärts gelegenen Übertragungsfaser (1) in der bei $C_1$ zur Achse $SC_1$ lotrechten Ebene in einer leicht in bezug auf $C_1$ versetzten Stellung so angeordnet ist, daß sein vom Spiegel (13) abgegebenes Bild sich symmetrisch in bezug auf $C_1$ auf dem Ende (5, 22) einer aufnehmenden Faser (5, 24) bildet, wobei der zentrale Abschnitt dieses ersten Spiegels (13) durch eine zweite sphärische bzw. kugelige reflektierende Fläche (14, 26) mit gleichem Scheitelpunkt und gleichem Radius ersetzt wird, die jedoch so angeordnet ist, daß die Enden der bahnaufwärts gelegenen Fasern (1) und der aufnehmenden Faser (5, 24) nicht mehr konjugiert Gegenstand—Bild in bezug auf diese zweite reflektierende Fläche sind, und daß das Ende einer Verbindungsfaser (19) zum Detektor und gegebenenfalls das Ende einer Verbindungsfaser (21) zum Emitter bzw. Sender jeweils so angeordnet ist, daß es jeweils konjugiert Gegenstand—Bild der Enden der bahnaufwärts gelegenen Fasern (1) und bahnabwärts gelegenen Fasern (5) in bezug auf diese zweite reflektierende Fläche ist.

2. Extraktions- und/oder Wiedereinbringungsvorrichtung nach Anspruch 1, dadurch gekennzeichnet, daß die zweite sphärische bzw. kugelige reflektierende Fläche ein Spiegel (14) ist, dessen Mittelpunkt $C_2$ in bezug auf $C_1$ versetzt ist, und daß das Ende der Verbindungsfaser (19) zum Detektor und gegebenenfalls das Ende der Verbindungsfaser (21) zum Sender (11) in der zur Achse $SC_1$ in $C_1$ lotrechten Ebene bzw. symmetrisch zum Ende der bahnaufwärts gelegenen Faser (1) und bahnabwärts gelegenen Faser (5) in bezug auf $C_2$ angeordnet ist.

3. Extraktions- und/oder Wiedereinbringungsvorrichtung nach Anspruch 1, dadurch gekennzeichnet, daß die zweite reflektierende Fläche ein konkaves Beugungsgitter das auf dem gleichen sphärischen Träger aufgetragen ist wie der Spiegel (13), und daß die Enden wenigstens einer Verbindungsfaser zu wenigstens einem Detektor einer bestimmten Wellenlänge und wenigstens einer Verbindungsfaser zu wenigstens einem Sender einer bestimmten Wellenlänge jeweils in den Brechungsrichtungen ($D_1$, $D_2$) bzw. ($E_1$, $E_2$) angeordnet sind, die den betreffenden Wellenlängen entsprechen.

4. Extraktions- und/oder Wiedereinbringungsvorrichtung nach einem der Ansprüche 1—3, dadurch gekennzeichnet, daß die aufnehmende Faser (5, 24), deren aufnehmendes Ende (5, 22) symmetrisch in bezug auf $C_1$ am Ende der bahnaufwärts gelegenen Übertragungsfaser (1) angeordnet ist, von der bahnabwärts gelegenen Übertragungsfaser (5) gebildet ist.

5. Extraktions- und/oder Wiedereinbringungsvorrichtung nach einem der Ansprüche 1—3, dadurch gekennzeichnet, daß die aufnehmende Faser (5, 24), deren aufnehmendes Ende (5, 22) symmetrisch in bezug auf $C_1$ am Ende der bahnaufwärts gelegenen Übertragungsfaser (1) gelegen ist, von einer Verbindungs- bzw. Zwischenfaser (24) zur optischen Verzögerung gebildet ist, deren aufnehmendes Ende (22) und emittierendes Ende (23) jeweils symmetrisch in bezug auf $C_1$ am Ende der bahnaufwärts gelegenen Fasern (1) und bahnabwärts gelegenen Fasern (5) gelegen ist.

6. Extraktions- und/oder Wiedereinbringungsvorrichtung nach einem der vorhergehenden Ansprüche, dadurch gekennzeichnet, daß die Verbindungs- bzw. Zwischenfaser zu dem Sender (11) eine kleine Öffnung aufweist.

## Claims

1. Device for extracting and/or reinjecting an optical signal between an upstream input transmission optical fibre (1) and a downstream output transmission optical fibre (5), intended to provide, at the same time, continuity of the transmission of an optical signal between the upstream (1) and downstream (5) fibres, the extraction of a part of the optical signal coming from the upstream fibre to direct it towards at least one detector (9), and, if appropriate, the reinjection into the downstream fibre (5) of a new optical signal coming from at least one emitter (11), a device of the type incorporating a reflecting system (13, 14/26) arranged in the optical path between the upstream fibre (1) and the downstream fibre (5), adapted so as to direct towards the detector (9) only a part of the light coming from the upstream fibre (1), the same reflecting system also being, if appropriate, employed for reinjecting into the downstream fibre light coming from the emitter (11), characterised in that the said reflecting system (13, 14/26) incorporates a concave spherical mirror (13) with apex S and centre $C_1$, and in which the end of the upstream transmission fibre (1) is arranged, in the plane at right-angles at $C_1$ to the axis $SC_1$, in a position which is slightly offset relative to $C_1$ so that its image produced by the mirror (13) is formed symmetrically relative to $C_1$ on the end (5, 22) of a receiver fibre (5, 24), the central part of this first mirror (13) being replaced by a second reflective spherical surface (14, 26) with the same apex and the same radius but arranged so that the ends of the upstream fibres (1) and of the receiver fibre (5, 24) are no longer object-image conjugates relative to this second reflecting surface, and in that the end of a fibre (19) for coupling to the detector and, if appropriate, that of a fibre (21) for coupling to the emitter are arranged so as to be object-image conjugates, respectively, of the ends of the upstream (1) and downstream (5) fibres relative to this second reflecting surface (14, 26).

2. Extracting and/or reinjecting device according to Claim 1, characterised in that the second spherical reflecting surface is a mirror (14), the centre $C_2$ of which is offset relative to $C_1$, and in that the end of the fibre (19) for coupling to the detector, and, if appropriate, that of the fibre (21) for coupling to the emitter, are arranged in the plane at right-angles at $C_1$ to the axis $SC_1$, respectively, symmetrically to the end of the upstream (1) and downstream (5) fibres relative to $C_2$.

3. Extracting and/or reinjecting device according to Claim 1, characterised in that the second reflecting surface is a concave diffraction grating scribed on the same spherical support as the mirror (13), and in that the ends of at least one fibre for coupling to at least one detector of a particular wavelength and of at least one fibre for coupling to at least one emitter of a particular wavelength, are arranged respectively in the diffraction directions $(D_1, D_2)$ and $(E_1, E_2)$ corresponding to the wavelengths in question.

4. Extracting and/or reinjecting device according to one of Claims 1 to 3, characterised in that the said receiver fibre (5, 24), the receiving end (5, 22) of which is arranged symmetrically, relative to $C_1$, at the end of the upstream transmission fibre (1), consists of the said downstream transmission fibre (5).

5. Extracting and/or reinjecting device according to one of Claims 1 to 3, characterised in that the said receiver fibre (5, 24), the receiving end (5, 22) of which is arranged symmetrically, relative to $C_1$, to the end of the upstream transmission fibre (1), consists of an intermediate optical delay fibre (24), the receiver (22) and transmitter (23) ends of which are arranged, respectively, symmetrically to the end of the upstream (1) and downstream (5) fibres relative to $C_1$.

6. Extracting and/or reinjecting device according to any one of the preceding claims, characterised in that the fibre for coupling to the emitter (11) is a small-opening fibre.

Fig 1

Fig 2

# Fig 3

# Fig 4